(19) Europäisches Patentamt
European Patent Office
Office européen des brevets

(11) Publication number: 0 093 170 B1

(12) # EUROPEAN PATENT SPECIFICATION

(45) Date of publication of patent specification: 15.03.89

(51) Int. Cl.$^4$: G 01 C 19/64

(21) Application number: 83900295.3

(22) Date of filing: 05.11.82

(86) International application number: PCT/US82/01555

(87) International publication number: WO 83/01683 11.05.83 Gazette 83/11

(54) MULTIMODE FIBER OPTIC ROTATION SENSOR.

(30) Priority: 06.11.81 US 318813

(43) Date of publication of application: 09.11.83 Bulletin 83/45

(45) Publication of the grant of the patent: 15.03.89 Bulletin 89/11

(84) Designated Contracting States: AT BE CH DE FR GB LI LU NL SE

(56) References cited: No relevant documents have been disclosed.

(73) Proprietor: THE BOARD OF TRUSTEES OF THE LELAND STANFORD JUNIOR UNIVERSITY
Encina 105 Stanford University
Stanford California 94305 (US)

(72) Inventor: SHAW, Herbert John
719 Alvarado Row
Stanford, CA 94305 (US)
Inventor: PAVLATH, George A.
3513 Calle Quebracho
Thousand Oaks, CA 91360 (US)

(74) Representative: Rushton, Ronald et al
SOMMERVILLE & RUSHTON 11 Holywell Hill
St. Albans Hertfordshire AL1 1EZ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 093 170 B1

**Description**

The present invention relates to fiber optic rotation sensors, and particularly to a fiber optic rotation sensor comprising a Sagnac interferometer with a multimode fiber sensing loop and a method of sensing rotation according to the preambles of claims 1 and 14, respectively. An example of such a rotation sensing apparatus and method is disclosed in document US—A—4208128.

Fiber optic rotation sensors typically comprise a loop of fiber optic material to which light waves are coupled for propagation around the loop in opposite directions. Rotation of the loop creates a phase difference between the counter propagating waves, in accordance with the well-known "Sagnac effect", with the amount of phase difference corresponding to the velocity of loop rotation. The counterpropagating waves, when recombined, interfere constructively or destructively to produce an optical output signal which varies in intensity in accordance with the rotation rate of the loop. Rotation sensing may be accomplished by detection of this optical output signal.

Accurate detection of the rotationally induced Sagnac phase difference requires that nonrotationally induced phase differences, caused by the physical properties of the fiber (e.g. fiber birefringence), be substantially eliminated, since such phase differences are indistinguishable from the Sagnac phase difference, and thus, may provide a "phase error" in the optical output signal. If the optical paths for the counter propagating waves are identical when the loop is at rest, so that these nonrotationally induced phase differences are eliminated, the interferometer is said to be "reciprocal", while if they are not identical, the interferometer is said to be "nonreciprocal".

Nonreciprocity in fiber optic interferometric rotation sensors is caused by two factors. First, an optical fiber may support many different fundamental modes, e.g., the $HE_{11}$ mode, the $TE_{10}$ mode, etc., each of which has a different propagation velocity or phase velocity. (For the present discussion, a mode may be viewed as a particular optical path through the fiber.) Second, the birefringence of an optical fiber is not uniform along the fiber, and thus, coupling of light energy between the modes exists. The presence of both of these factors causes each of the counterpropagating waves to travel different optical paths around the fiber loop, so that when they are recombined, there is a phase difference therebetween. This phase difference, which may be several orders of magnitude larger than the Sagnac phase difference, is indistinguishable from the rotationally induced Sagnac phase difference, and thus, manifests itself as an error in the optical output signal. It should be emphasized that neither of the above two factors taken individually is sufficient to destroy reciprocity. Both factors must be present to yield nonreciprocal operation.

The prior art has endeavored to satisfy the reciprocity requirement by utilizing single mode fibers, which have only one fundamental propagation mode, namely, the $HE_{11}$ mode. Although use of a single mode fiber would theoretically eliminate the first factor, and thus, provide reciprocity, it has been found that, in practice, a single mode fiber has two orthogonal polarization modes which are nearly degenerate, i.e., they have slightly different propagation phase velocities. Such difference in propagation velocities, while quite small, is nevertheless sufficient to cause nonreciprocal operation of single mode fiber rotation sensors. This problem has been solved in the prior art, e.g., by utilizing a fiber optical polarizer to block one of the two polarization modes of the single mode fiber as described in an article by R. Ulrich and M. Johnson, entitled "Fiber Ring Interferometer Polarization analysis", *Optics Letters*, Vol. 4, p. 152 (April 1979).

Apart from the disclosure in US—A—4208128, there has been little attention directed towards the use of multimode fibers for rotation sensing because of the large number of modes and different propagation velocities. While the difference in propagation velocities between modes can be reduced by utilizing a graded index multimode fiber as opposed to a step index multimode fiber, the difference in propagation velocities for either type of fiber is sufficiently large that multimode fibers have heretofore been considered unsuitable for use in rotation sensors. Moreover, the problem is further complicated by the fact that within each of the fundamental modes of a multimode fiber, there exists a set of mode patterns, referred to herein as "generalized polarization modes", having propagation velocities which are nearly, but not exactly, equal. The difference in propagation velocities between the generalized polarization modes of a particular fundamental mode are typically on the same order of magnitude as the difference in propagation velocities between the fundamental modes of a graded index multimode fiber. Because of the many modes involved (thousands, in some cases) and their associated propagation velocities, it has heretofore been considered impossible, or at least impractical, to achieve reciprocal operation in a Sagnac interferometric rotation sensor utilizing a single multimode fiber.

The rotation sensor of the present invention comprises a Sagnac interferometer having a loop of multimode optical fiber, a light source for producing light, a coupler which splits the light into two lightwaves which propagate in opposite directions through the loop, and a detector which detects an optical output signal after propagation of the light through the loop. The light source and coupler are arranged such that the optical power for each of the two lightwaves is substantially evenly divided among the modes of the multimode fiber. The coupler is adapted to combine the two lightwaves after propagation through the loop to form the optical output signal comprised of light from substantially all of the modes of said fiber, and the detector is positioned to intercept the optical output signal and detect the light from substantially all of the modes. Rotation of the loop induces a phase difference between the

counterpropagating waves which causes the magnitude of the optical output signal to vary in accordance with the rate of rotation. By detecting the optical output signal, a direct indication of the rotation rate may be obtained.

The invention also comprises a method of sensing rotation with a Sagnac-interferometer. Light is introduced into a loop of multimode optical fiber and is split into two lightwaves which propagate in opposite directions through said loop. An optical output signal is detected after propagation of the light through the loop. The method is characterised by substantially evenly dividing the optical power for each of the two lightwaves among the modes of the multimode fiber and combining the two waves after passing through the loop to produce an optical output signal comprised of light from substantially all of the modes, and detecting this light from substantially all of the modes.

It has been found that phase errors in the optical output signal, caused by non-rotationally induced phase differences between the counterpropagating waves, may be systematically reduced or eliminated by (1) utilizing source light having a coherence length which is less than the difference in optical path length between propagation modes, (2) utilizing a sufficiently large detector so that substantially the entire optical output signal is impressed upon the detector surface, and (3) as provided by the invention coupling light to the multimode fiber so that the electric field amplitudes in each of the propagation modes are substantially equal. Such elimination or reduction of phase errors permits detection of the rotationally induced Sagnac phase difference, yielding a practical, usable multimode rotation sensor.

The multimode fiber rotation sensor of the present invention is surprisingly stable and relatively insensitive to variations in fiber birefringence cause by environmental factors such as temperature or vibration. Phase changes and coupling between modes due to such variations in fiber birefringence tend to be averaged over the modes so that the overall effect of the environmental factors upon the optical output signal is quite small. The stability of the optical output signal is a function of the number of modes, and thus, it is preferable to use a fiber which supports a large number of modes. In this regard, a step index multimode fiber may be preferred for use in the present invention, since a step index fiber is capable of supporting more modes than a graded index fiber of comparable size.

The multimode fiber rotation sensor of the present invention has significant advantages over current state of the art single mode fiber rotation sensors. One of the most important advantages is that the present invention is much less expensive to fabricate, since multimode fibers and multimode components (e.g. couplers) are less costly and easier to work with than are single mode fibers and components. Moreover, since spatially incoherent light may be used, the rotation sensor can utilize an inexpensive light emitting diode (LED) as a source, rather than an expensive high spatial coherence length laser.

Another advantage is that the multimode fiber sensing loop has less susceptibility to the Kerr effect, since, in the present invention, this effect is spatially averaged over a large number of modes. Another reason for such reduced susceptibility is that the larger diameter core of a multimode fiber results in a lower optical intensity in the fiber. Further, multimode fiber is less sensitive to the Faraday effect, which may be induced by external magnetic fields, since the model birefringence of the fiber is high compared to birefringence induced by the Faraday effect. In essence, the multimode fiber's linear birefringence overwhelms the circular birefringence induced by the Faraday effect. Finally, the multimode rotation sensor, like its counterpart single mode sensor, can be fabricated as an all fiber system, utilizing a single, continuous strand of fiber optical material.

These and other features of the present invention may be more fully understood through reference to the drawings.

Figure 1 is a schematic drawing of the rotation sensor of the present invention, showing a single, continuous strand of optical fiber, to which light from a light source is coupled, and showing the multimode sensing loop, formed from such single, continuous strand; in addition, Figure 1 shows a detection system for detecting the phase difference between waves counterpropagating through the fiber loop;

Figure 2 is a schematic drawing illustrating a conceptual model of the fiber loop 16, showing, for an exemplary pair of modes, the electric field components of the counterpropagating waves as they traverse the fiber loop;

Figure 3 is a schematic drawing of the conceptual model of Figure 2, showing the electric field components of the counterpropagating waves after they have traversed the fiber loop;

Figure 4 is a vector diagram of the optical output signal, showing a vector directed along the real axis, which represents the vector sum of the "dc" terms resulting from the electric field components shown in Figure 3, and another vector, rotating in the manner of a phasor, which represents the vector sum of the interference terms resulting from the electric field components shown in Figure 3, and further illustrating the response of the vector representing the interference terms to 1) the rotationally-induced Sagnac phase difference, and 2) phase errors caused by non-rotationally induced phase differences;

Figure 5 is a graph, corresponding to the vector diagram of Figure 4, of the optical intensity, as measured by the detector, versus the Sagnac phase difference, illustrating the effect of non-rotationally induced phase errors;

Figure 6 is a vector diagram of the interference terms resulting from Group III electric field components;

Figure 7 is a vector diagram showing a resultant vector which represents the vector sum of the two vectors of Figure 6, and illustrating the phase error associated with such resultant vector sum;

Figure 8 is a vector diagram showing the vectors of Figure 6 equalized in magnitude;

Figure 9 is a vector diagram of a resultant vector, which represents the vector sum of the vectors of Figure 8, illustrating that phase errors may be eliminated by equalizing the magnitudes of the vectors.

In the preferred embodiment, shown in Figure 1, the rotation sensor of the present invention comprises a light source 10 for introducing a CW light wave into a single, continuous length or strand of multimode optical fiber 11. As used herein, "multimode fiber" means that the fiber supports plural fundamental modes for the particular source light used, as opposed to single mode fiber which supports only one fundamental mode. The fiber 11 passes through ports, labeled A and C, of a first directional coupler 12, and through ports, labeled A and C of a second directional coupler 14. Thus, the fiber 11 extends from the light source 10 to port A of the coupler 12 and extends from port C of the coupler 12 to port A of the coupler 14. The portion of the fiber 11 extending from port C of the coupler 14 is wound into a loop 16. By way of specific example, the loop 16 may comprise 1,000 turns, each bounding an area of about 150 sq. cm. The end of the fiber 11, from the loop 16, is passed through ports labeled D and B of the coupler 14, with port D adjacent to the loop 16. A small portion 17 of the fiber 11 extends from port B of the coupler 14 and terminates non-reflectively, without connection.

A second length of fiber 19 is passed through the ports labeled D and B of the coupler 12. The portion of the fiber 19 projecting from port D terminates non-reflectively, without connection. However, the portion of the fiber 19 projecting from port B of the coupler 12 is optically coupled to a photodetector 20 which produces an output signal proportional to the intensity of the light impressed thereon.

The present invention also includes detection electronics 22, comprising a lock-in amplifier 24, a signal generator 26 and a phase modulator 28. By way of specific example, the phase modulator 28 may comprise a PZT cylinder having a diameter of, e.g., about 2½ to 5 centimeters, about which a portion of the fiber loop 16 is wrapped, e.g., 4 to 10 times. The fiber is bonded to the PZT cylinder 28 by a suitable adhesive so that the fiber 11 will be stretched upon radial expansion of the cylinder 28. In this regard, the phase modulator 28 is driven by an AC modulating signal having a frequency in the range of, e.g., 10—100 kHz, which is provided on a line 30 from the signal generator 26. For proper operation of the detection electronics 22, it is important that the phase modulator 28 be located on one side of the loop 16, e.g., adjacent to the port D of the coupler 14, rather than at the center of the sensing loop 16.

The AC modulation signal from the generator 26 is also supplied on a line 32 to the lock-in amplifier 24. A line 34 connects the lock-in amplifier 24 to receive the detector 20 output signal. The amplifier utilizes the modulation signal from the generator 26 as a reference for enabling the amplifier 24 to synchronously detect the detector output signal at the modulation frequency. Thus, the amplifier 24 effectively provides a band pass filter at the fundamental frequency (i.e., the first harmonic frequency) of the phase modulator 28, blocking all other harmonics on this frequency. It will be understood by those skilled in the art that the magnitude of this harmonic component of the detector output signal is proportional through an operating range to the rotation rate of the loop 16. The amplifier 24 outputs a signal which is proportional to this first harmonic component, and thus, provides a direct indication of the rotation rate.

Additional details of the detection electronics 22 are described in international patent application No. PCT/UA 82/00400 published October 14, 1982, as publication No. WO 82/03456 and entitled "Fiber Optic Rotation Sensor". This detection system is also described in *Optics Letters*, Vol. 6, No. 10 (October 1981), pp. 502—504. Another detection system which is suitable for use in the present invention is described in an article authored by J. L. Davis and S. Ezekiel, published in SPIE, Vol. 157, Laser Inertial Rotation Sensors (1978), pp. 131—136.

It is believed that the type of multimode fiber utilized for the fiber 11 is not critical to operation of the present invention. Thus, step index as well as graded index multimode fibers may be used. However, the performance of the rotation sensor, in terms of its susceptibility to environmental influences such as temperature and vibration, appears to be a function of the number of modes. Thus, a step index multimode fiber which is capable of supporting more modes than a comparably sized graded index fiber may be preferable. In the embodiment shown, the fiber 11 comprises a step index multimode fiber having a core diameter of about 50 microns and the fiber 19 is identical to the fiber 11.

A fiber optic directional coupler suitable for use as the couplers 12 and 14 is disclosed in Patent US—A—4,136,929, issued January 30, 1979 to Suzaki. As shown in Figures 3a to 3d of this patent, the coupler comprises a pair of blocks having arcuate grooves in which respective multimode fibers are mounted. The surfaces of the blocks are cut and polished so that the cladding and a portion of the core are removed from one side of the fiber. The surfaces of the blocks are then placed together in face to face relationship, with the exposed core portions of the fibers juxtaposed. Preferably, the couplers 12 and 14 of Figure 1 each have a coupling ratio of 50 percent so that light introduced into port A is evenly split between ports C and D. The rotation sensor of Figure 1 may also be constructed from bulk optic components by substituting beam splitters for the couplers 12, 14.

The light source 10 is important to proper operation of the present invention. Specifically, the source 10 should provide light which is highly incoherent so hat the relative phases of light in each of the modes of the fiber are essentially random with respect to each other. In addition, the light should be coupled to the fibers so that the electric field amplitudes for each mode are equal in magnitude. As discussed hereinafter, to the extent that both of these requirements are satisfied, certain types of non-rotationally induced phase errors will be eliminated. A preferred light source for use as the source 10 is a surface emitting-type light

emitting diode (LED) having a wavelength on the order of 700 to 900 nm. Since an LED is an extended source, it tends to launch each mode with an equal light intensity. Further, the light produced by an LED is highly incoherent. It should be noted that, in general, an LED is particularly desirable for use as a light source since it is relatively inexpensive compared to lasers.

As an alternative, incoherent light may be generated utilizing a coherent light source by providing a phase modulator 40 adjacent to the source 10, as shown in phantom lines in Figure 1. The modulator 40 may be of the same type as the modulator 28, e.g., the PZT cylinder about which the fiber 11 is wrapped. The modulator 30 may be driven by a signal generator (not shown) which produces either a random signal or a high frequency signal above the detection bandwidth of the electronics 22. The operating frequency of this signal generator, however, should be different than that of the signal generator 26. Moreover, it is important that the modulation be accomplished prior to reaching the loop 16; otherwise, such modulation will tend to average the rotation signal to zero.

In addition to providing incoherent light, the modulator 40 may also serve as a mode scrambler to distribute light evenly among the modes of the fiber. In essence, wrapping the fiber, e.g., 5—10 times around a relatively small diameter (e.g., $1\frac{1}{4}$ to $2\frac{1}{2}$ cm.) PZT cylinder causes sufficient coupling between the modes to substantially equalize the field amplitudes among the modes.

The photodetector 20 is also of critical importance to proper operation of the rotation sensor. Specifically, the photodetector should have a sufficiently large surface area to intercept substantially all of the light exiting the fiber 19 when positioned normal to the fiber axis. The diameter of the photodetector 20 is typically in the range of 2—10 millimeters, the exact size depending upon the diameter of the multimode fiber 19, the numerical aperture of the fiber 19 (which defines the divergence of the light as it exits the fiber 19) and the distance between the end of the fiber 19 and the photodetector 20. In the embodiment shown, the photodetector 20 is a standard PIN or Avalanche Silicon Photodiode, having a diameter of 10 millimeters.

In operation, a continuous light wave $W_i$ is input from the light source 10 for propagation through the fiber 11. As the wave $W_i$ passes through the coupler 12, a portion of the light (e.g. 50 per cent) is lost through port D. The remaining light propagates from port C of the coupler 12 to the coupler 14, where the light is split evenly into two waves $W_1$, $W_2$, which propagate in opposite directions about the loop 16. After traverse of the loop 16, the waves $W_1$, $W_2$ are recombined by the coupler 14 to form an optical output signal $W_0$. A portion of thee recombined wave $W_0$ may be lost through the port B of the coupler 14, while the remaining portion travels from port A of the coupler 14 to port C of the coupler 12, where it is again split, with a portion thereof (e.g., 50%) transferred to the fiber 19. Upon exiting the end of the fiber 19, the wave $W_0$ is impressed upon the photodetector 20, which outputs an electrical signal that is proportional to the optical intensity of the wave $W_0$.

The intensity of this optical output signal will vary in proportion to the type (i.e., constructive or destructive) and amount of interference between the waves ($W_1$, $W_2$, and thus, will be a function of the phase difference between the waves $W_1$, $W_2$. Assuming, for the moment, that the fiber 11 is "ideal" (i.e., that the fiber birefringence is uniform along its length), measurement of the optical output signal intensity will provide an accurate indication of the rotationally induced Sagnac phase difference, and thus, the rotation rate of the fiber loop 16.

As indicated above, present state-of-the-art, multimode fibers are far from "ideal", in that 1) they are birefringent, and 2) the birefringence is not uniform along the length of the fiber, thus, yielding nonrotationally induced phase differences (i.e., phase errors), which are indistinguishable from the rotationally induced Sagnac phase difference. In this embodiment the present invention utilizes three different techniques to reduce or eliminate these phase errors, namely, 1) use of a source producing highly incoherent light, so that the relative phases of light launched in each of the modes of the fiber are essentially random with respect to each other, 2) equalizing the electric field amplitudes for light in each of the modes, and 3) utilizing a detector having a relatively large surface area to capture substantially the entire optical output signal power. Each of these techniques is directed towards a particular group or class of phase errors.

Such reduction or elimination of phase errors may be more fully understood through reference to Figure 2, which depicts a conceptual model of any two arbitrary modes of a multimode fiber chosen from any arbitrary set of complete orthogonal modes which allow the description of any propagating field pattern in the multimode fiber as a linear superposition of the fields of such set of orthogonal modes. Each mode is assumed to have a propagation velocity different from that of the other modes. Further, to account for the fact that birefringence is not uniformly distributed along the length of the fiber, it is assumed that there is coupling of light energy between modes. Such coupling of energy will be referred to herein as "cross coupling".

While it is recognized that, in reality, a multimode fiber may have e.g. thousands of modes, for the purposes of the present discussion, only two modes will be considered, it being understood that the two mode case may be extended to an N mode case, as will be demonstrated mathematically hereinafter.

The conceptual fiber model of Figure 2 will be utilized to represent the sensing loop 16 (Figure 1). The counterpropagating waves $W_1$, $W_2$, are schematically represented as being coupled, by the coupler 14, to the loop 16, by the dashed arrows. The two exemplary, arbitrarily chosen modes of the multimode optical fiber are schematically represented in Figure 2 by a first line, connecting a pair of terminals C′ and D′, and a

second line, parallel to the first line, connecting a second pair of terminals C″ and D″. The terminals C′ and C″ on the left side of Figure 2 correspond the port C of the coupler 14, while the terminals D′ and D″ on the right side of Figure 2 correspond to the port D of the coupler 14. The above mentioned first and second lines connecting the terminals will be used to represent arbitrary modes i and j, respectively, of the fiber loop 16.

Cross coupling between the modes i and j is represented by a pair of lines, labeled "Branch 1" and "Branch 2", respectively. Branch 1 represents cross coupling between the terminals C″ and D′ while branch 2 represents cross coupling between the terminals C′ and D″. The intersection of branch 1 with branch 2, designated by the referenced numeral 50, will be referred to as the "coupling center" although it will be understood that no coupling exist between the two branches 1 and 2. The coupling center 50 is shown as being offset from the center of the fiber loop 16 to illustrate that the fiber birefringence is not uniform along its length, and thus, is not symetrically distributed around the fiber loop 16. Therefore, cross coupled light will travel a longer path in one of the modes than the other, yielding a nonrotationally induced phase difference therebetween.

As shown in Figure 2, the wave of $W_1$ is coupled to the fiber loop 16 so that the modes i and j are launched with electric field amplitudes $E_i^+$ and $E_j^+$ respectively. Similarly, the wave $W_2$ is coupled to launch each of the modes i and j with electric field amplitudes $E_i^-$ and $E_j^-$, respectively. The plus (+) and minus (−) superscripts designate the direction of propagation, the clockwise direction about the loop 16 being designated by the plus (+) sign, and the counterclockwise direction about the loop 16 being designated by the minus (−) sign.

As light in each of the modes i and j traverses the fiber loop 16, energy is coupled between the modes, so that each electric field is divided into two components, namely, a "straight through" component, designated by the subscript "s", and a "cross coupled" component, designated by the subscript "c". Thus, $E_i^+$ is divided into a straight through component $E_{is}^+$ which remains in mode i during traverse of the loop 16, and a cross coupled component $E_{jc}^+$, which is cross coupled to mode j during traverse of the loop 16. Similarly, $E_i^-$ is divided into components $E_{is}^-$ and $E_{jc}^-$; $E_j^+$ is divided into components $E_{ic}^+$ and $E_{js}^+$; and $E_j^-$ is divided into components $E_{js}^-$ and $E_{ic}^-$.

After the light waves have traversed the fiber loop 16, the light at terminal C′ will comprise components $E_{is}^-$ and $E_{ic}^-$; the light at terminal C″ will comprise component $E_{js}^-$ and $E_{jc}^-$; the light at terminal D′ will comprise components $E_{is}^+$ and $E_{ic}^+$; and the light at terminal D″ will comprise components $E_{js}^+$ and $E_{jc}^+$, as shown in Figure 3. These 8 electric field components are combined by the coupler 14 to form the optical output signal $W_0$. It will be recognized by those skilled in the art that, in general, superposition of any two electric field components, e.g., $E_{is}^+$ and $E_{ic}^+$ will yield a resultant intensity (I), as measured by the detector 20, which may be defined as follows:

$$I = |E_{is}^+|^2 + |E_{ic}^+|^2 + 2\,|E_{is}^+|\,|E_{ic}^+|\,\cos\phi \qquad (1)$$

where, in this particular example, $\phi$ is the phase difference between field components $E_{is}^+$ and $E_{ic}^+$.

The first two terms of equation (1), namely $|E_{is}^+|^2$ and $|E_{ic}^+|^2$ are steady-state or "d.c." terms, while the last term is an "interference" term having a magnitude depending upon the phase difference $\phi$ between the fields $E_{is}^+$ and $E_{ic}^+$.

In general, all 8 of the above fields $E_{is}^-$, $E_{ic}^-$, $E_{js}^-$, $E_{jc}^-$, $E_{is}^+$, $E_{ic}^+$, $E_{js}^+$ and $E_{jc}^+$, will interfere with each other to provide an optical intensity at the detector 20 (Figure 1) comprised of 8 "dc" terms, which are not phase-dependent, and 28 "interference" terms which are phase-dependent. The number of combinations of phase-dependent terms is actually n(n−1) or 56 phase-dependent terms. However, one-half of these terms are simply the re-ordered forms of the other half, yielding 28 non-redundant terms.

The 8 dc terms are shown in Figure 4 as a single vector sum, labeled $I_{dc}$, while the 28 interference terms are shown in Figure 4 as a single vector, labeled $I_I$. These vectors $I_{dc}$ and $I_I$ are plotted in a complex plane. Upon rotation of the fiber loop 16 (Figure 1) the phase-dependent vector $I_I$ rotates, in the manner of a phasor, through an angle equal to the rotationally reduced phase difference $\phi_s$ due to the Sagnac effect. The projection of the interference vector $I_I$ upon the real axis, when added to the vector $I_{dc}$, yields the total optical intensity $I_{DET}$ of the optical output signal $W_0$, as measured by the detector 20 (Figure 1). In Figure 5, this optical intensity $I_{DET}$ is plotted as function of the Sagnac phase difference $\phi_s$, as illustrated by the curve 52.

As indicated above in reference to Figure 2, cross coupling between the modes i and j can cause the fiber loop 16 to be nonreciprocal, resulting in a nonrotationally induced phase difference between the above described electric field components, and yielding an accumulated phase error $\phi_e$, which is indistinguishable from the rotationally induced Sagnac phase difference $\phi_s$. The phase error $\phi_e$ causes the phasor $I_I$ to be rotated, e.g., from the position shown in solid lines to the position shown in dotted lines in Figure 4. This results in the curve 52 of Figure 5 being translated by an amount $\phi_e$ e.g., from the position shown in solid lines to the position shown in dotted lines in Figure 5.

Elimination or reduction of the accumulated phase error $\phi_e$ requires an analysis of the 28 interference terms resulting from superposition of the 8 electric field components discussed in reference to Figure 2. At the outset, it will be recognized that interference between electric field components $E_{is}^+$ with $E_{is}^-$, and $E_{js}^+$ with $E_{js}^-$, result in no phase error contribution, since the light represented by these components is not cross

coupled, and traverses the loop in a single one of the modes. However, the remaining 26 interference terms can contribute to the accumulated phase error $\phi_e$. These 26 interference terms correspond to 26 pairs of electric field components which may be classified into 3 groups, namely Group I, Group II, and Group III, as follows:

Group I

$E^+_{is}$ and $E^+_{ic}$

$E^+_{is}$ and $E^-_{ic}$

$E^-_{is}$ and $E^+_{ic}$

$E^-_{is}$ and $E^-_{ic}$

$E^+_{js}$ and $E^+_{jc}$

$E^+_{js}$ and $E^-_{jc}$

$E^-_{js}$ and $E^+_{jc}$

$E^-_{js}$ and $E^-_{jc}$

Group II

$E^+_{is}$ and $E^-_{jc}$

$E^+_{is}$ and $E^-_{js}$

$E^+_{is}$ and $E^+_{jc}$

$E^+_{is}$ and $E^+_{js}$

$E^+_{ic}$ and $E^-_{js}$

$E^+_{ic}$ and $E^-_{js}$

$E^+_{ic}$ and $E^+_{jc}$

$E^+_{ic}$ and $E^+_{js}$

$E^-_{ic}$ and $E^-_{jc}$

$E^-_{ic}$ and $E^-_{js}$

$E^-_{ic}$ and $E^+_{jc}$

$E^-_{ic}$ and $E^+_{js}$

$E^-_{is}$ and $E^-_{jc}$

$E^-_{is}$ and $E^-_{js}$

$E^-_{is}$ and $E^+_{jc}$

$E^-_{is}$ and $E^+_{js}$

Group III

$E^+_{ic}$ and $E^-_{ic}$

$E^+_{jc}$ and $E^-_{jc}$

Although only the interfering electric field components are listed above, and not the interference terms themselves, it will be understood that the interference term for each of the above listed pairs of components may be readily calculated in accordance with the example provided in reference to equation (1).

Group I, includes those pairs of field components, which originated in different modes, but which are in the same mode upon reaching the coupler 14, after traversing the loop 16. For example, the first of Group I pair of components comprises a straight-through component $E^+_{is}$, which originated in mode i and remained

in mode i during traverse of the loop 16, and a cross coupled component $E^+_{ic}$ which originated in mode j but was cross coupled to mode i during traverse of the loop 16. Ordinarily, these components would interfere with each other, as described in reference to equation (1).

However, since the phase difference between incoherent light waves is random, interference between incoherent light wave components will be averaged to zero in the detector 20. Accordingly, Group I interference terms can be eliminated by insuring that each mode is launched with light that is incoherent, i.e., random in phase with respect to the light in the other modes. Thus, for example, if mode i is launched with light that is incoherent with respect to light in mode j, the average interence between, e.g., the components $E^+_{is}$ and $E^+_{ic}$, will be zero, since the phase difference therebetween is random, and therefore, will be averaged to zero in the detector 20. Similarly, the interference between the remaining components, e.g., $E^+_{is}$ and $E^-_{ic}$; $E^-_{is}$ and $E^+_{ic}$; etc., will be averaged to zero. Accordingly, by utilizing the incoherent source 10, described above, interference between the components listed in Group I and thus, phase errors caused by such interference, may be reduced or eliminated.

The degree of incoherence necessary to reduce Group I phase errors is a function of the optical path length difference between modes. To the extent that the coherence length of the source light is less than the optical path length difference between two given modes, the average interference between Group I components for those two modes, and thus, the phase error, will be reduced. For the case of N modes, a reduction in phase error will begin to occur when the coherence length of the light source is less than the difference between the longest optical path and the shortest optical path. However, for essentially complete elimination of Group I errors, the coherence length should be less than the smallest optical path difference between modes.

The relationship between the accumulated phase error $\phi_{e(I)}$ due to Group I terms and the coherence length may be approximated by determining the number of all possible combinations of mode pairs (including generalized polarization modes as well as fundamental modes) in which the coherence length is greater than the optical path length difference. This number will be referred to as "K". The phase error $\phi_{e(I)}$ is then:

$$\phi_{e(I)} = \frac{K}{N^2} \qquad (2)$$

where N is the number of modes, including both fundamental and generalized polarization modes.

For example, for a fiber having N=3,000 modes, the number of path length combinations would be N(N−1), or $(3{,}000)^2$ which yields 9,000,000 possible combinations. If 1% of these path length combinations have a path length difference which is greater than the coherence length of the source:

$$\phi_{e(I)} = \frac{9 \times 10^4}{9 \times 10^6} = 10^{-2} \qquad (3)$$

Thus, the error contribution due to Group I errors in this example is only $10^{-2}$ radians. For most practical applications, the total phase error $\phi_e$ as an order of magnitude, should be no greater than this value, e.g., $10^{-2}$ radians. Substituting this value in equation (2) yields:

$$k \leqslant .01N^2 \qquad (4)$$

Accordingly, the coherence length of the source 10 should be selected to satisfy equation (4). However, in general, the shorter the coherence length, the smaller the Group I phase error will be.

It will be understood by those skilled in the art that the optical path lengths of the fiber modes may be measured or calculated, using modal dispersion data provided by the manufacturer of the fiber.

Group II includes those pairs of electric field components which are in different modes, after traverse of the loop 16, regardless of the mode in which they originated. Thus, for example, field component $E^+_{is}$, in mode i is paired with component $E^-_{jc}$, in mode j. Since the modes, e.g., i,j, are orthogonal, and since the electric fields of orthogonal modes do not interfere, there will be no interference between the terms in Group II. It is important to recognize, however, that the field patterns of the paired electric fields in Group II are only orthogonal in a "global" sense. That is, the entire field patterns must be spatially averaged over a plane normal to the fiber axis to eliminate interference. If such spatial averaging is accomplished for only a portion of the field patterns, orthogonality may not exist. To ensure that substantially the entire field patterns of, e.g., the modes i and j are spatially averaged, the present invention utilizes a detector 20 which has a surface area sufficiently large to capture substantially all of the light exiting the end of the fiber 19, as discussed above.

Only two interference terms result from the pairs of electric field components listed in Group III, namely, an interference term resulting from superposition of the component $E^+_{ic}$ with $E^-_{ic}$, and another interference term resulting from superposition of the components $E^+_{jc}$ with $E^-_{jc}$. Thus, each interference term results from a pair of components, one of which originated in a first mode and, during traverse of the loop 16 was cross coupled to a second mode, while the other originated in that same first mode and was cross coupled to the same second mode, but traversing the loop 16 in the opposite direction. These interference terms, while being only two in number, are highly sensitive to the environment and can result

in a phase error which may be orders of magnitude larger than the Sagnac phase difference.

The interference between $E_{ic}^{+}$ and $E_{ic}^{-}$ yields a phase dependent term:

$$-\tfrac{1}{4}\,\eta_{ij}^{2}\;|E_j|^2\cos(\phi_s+\phi_p-\phi_q) \qquad (5)$$

Similarly, the interference between $E_{jc}^{+}$ and $E_{jc}^{-}$ yields a phase dependent term:

$$-\tfrac{1}{4}\,\eta_{ij}^{2}|E_i|^2\cos[\phi_s-(\phi_p-\phi_q)] \qquad (6)$$

Where $\eta_{ij}$ is the fraction of the electric field energy that is coupled between the i and j modes; $\eta_{ij}^2$ is the fraction of the optical intensity that is coupled between the i and j modes; $\Phi_s$ is the rotationally induced, Sagnac phase difference between the two components; $\Phi_p$ is the total accumulated phase for light that is cross coupled from one mode to another between the terminals C″ and D′; $\Phi_q$ is the total accumulated phase for light that is cross coupled from one mode to the other between terminals C′ and D″.

The vectors corresponding to these interference terms (5) and (6) are plotted in a complex plane in Figure 6, as the vectors 56 and 58, respectively. It will be understood that the interference terms (5) and (6) are merely the projections of the vectors 56 and 58 respectively, upon the real axis. The vectors 56 and 58 may be vectorially added to yield a resultant vector 60, shown in Figure 7. Note that, for clarity of illustration, the Sagnac phase difference $\Phi_s$ is assumed to be zero in Figures 6 and 7. As shown in Figure 7, the vector 60 is inclined from the real axis by a phase angle $\Phi_{e(III)}$, which represents the non-rotationally induced phase error due to interference between the components of Group III. The projection of the vector 60 upon the real axis is simply the algebraic sum of the two interference terms (5) and (6):

$$-\tfrac{1}{4}\,\eta_{ij}^{2}\{|E_j|^2\cos(\phi_s+\phi_p+\phi_q)+|E_i|^2\cos[\phi_s-(\phi_p-\phi_q)]\} \qquad (7)$$

Since the detector 20 measures only that component of the vector 60 which is along the real axis, the detector 20 output will be proportional to the algebraic sum (7). Thus, it may be seen that the phase error $\Phi_{e(III)}$ (Figure 7) will cause a corresponding error in the detector 20 output.

The algebraic sum (7) of the interference terms may be rewritten as follows:

$$-\tfrac{1}{4}\,\eta_{ij}^{2}\;[(|E_i|^2+|E_j|^2)\cos(\phi_p-\phi_q)\cos\phi_s+(|E_i|^2-|E_j|^2\sin(\phi_p-\phi_q)\sin\phi_s] \qquad (8)$$

Note that, if $|E_i|^2$ and $|E_j|^2$ are equal, this algebraic sum (8) reduces to:

$$-\tfrac{1}{2}\,\eta_{ij}^{2}\;|E|^2\cos(\phi_p-\phi_q)\cos\phi_s \qquad (9)$$

In this form, the effect of variations in the quantity $\Phi_p-\Phi_q$ can be distinguished from the rotationally induced Sagnac phase difference $\Phi_s$, as may be more fully understood through reference to Figures 8 and 9, which show the effect, upon the resultant vector 60, of making the vectors 56 and 58 equal in magnitude. It will be seen that, regardless of the value of the quantity $\Phi_p-\Phi_q$, the resultant vector 60 will always be directed along the real axis, and thus, the direction of the vector 60 is independent of variations in the quantity $\Phi_p-\Phi_q$. Although such variations will cause the vector 60 to fluctuate in magnitude, such fluctuations do not affect the detector 20 output substantially, since, as will be discussed hereinafter, these magnitude fluctuations will be averaged with corresponding magnitude fluctuations from many other modes of the multimode fiber, so that the sum total of all such fluctuations tend towards zero.

Accordingly, to the extent that the intensity of the light in each mode is launched with light having an intensity equal to that of the other modes, phase errors due to Group III terms will be eliminated. Preferably, the light in the modes should be equalized with respect to the intensity by the time it reaches the coupler 14 and is split into the counterpropagating waves so that the Group III interference terms have the proper magnitudes and phase angles in cancellation of the phase error at the detector 20. Further, all of the mode should be launched by the time the light is split at the coupler 14, since to the extent that a mode does not have any light intensity, the modes will not be equalized with respect to intensity, thereby producing Group III phase errors. Of course, even if all the modes are not launched, there will still be some reduction of Group III phase errors so long as some of the plural modes are substantailly equalized in intensity. As discussed above, the present invention utilizes a light-emitting diode (LED) to equally distribute the optical intensity among all of the fiber modes.

The above analysis may be applied to every combination of mode pairs within the multimode fibers, with the same results, namely the elimination of phase errors. Further, when many modes are utilized, the environmental sensitivity of the detected optical signal tends to diminish. In this regard it will be recalled, from the discussion in reference to Figures 4 and 5, that the total optical intensity ($I_{DET}$), as measured by the detector 20, is:

$$I_{DET} = I_{dc} + I_i \cos \phi_s \tag{10}$$

Assuming that the modes are launched with light having electric fields (E) that are equal in amplitude, $I_{dc}$ is simply:

$$I_{dc} = 2N \left|\frac{E}{2}\right|^2 \tag{11}$$

where N is the number of fiber modes, including both fundamental modes and generalized polarization modes.

Further, assuming that the light in each mode is incoherent with respect to all other modes, and that the detector 20 has sufficient surface area to ensure global orthogonality, so that Group I and Group II interference terms are zero, the interference term $I_i \cos \phi$ of equation (10) may be expressed as:

$$I_i \cos\phi_s = \tfrac{1}{2}\sum_{k=1}^{N} \xi_k^2 \;|E|^2 \cos\phi_s - \tfrac{1}{2}\sum_{k=1}^{N}\sum_{\substack{u=1\\ k \neq u}}^{N} \eta_{ku}^2 \;|E|^2 \cos\phi_{ku}\cos\phi_s \tag{12}$$

where: $\eta_{ku}^2$ is the fraction of the optical power coupled from either the $k^{th}$ mode to the $u^{th}$ mode, or from the $u^{th}$ mode to the $k^{th}$ mode. $\xi_k^2$ is the uncoupled fraction of such optical power, which remains in a given mode, e.g., the $k^{th}$ mode, without cross coupling.

Further, $\phi_{ku}$ is the difference in the total accumulated phase (1) light originating in the one mode k, u, which is cross coupled to the other mode k,u, and which traverses the loop 16 in the plus (+) direction, and (2) light originating in that same one mode k,u, which is cross coupled to that same other mode k,u, but which traverses the loop 16 in the other or minus (−) direction. For the above discussion relating to modes i,j (Figure 2), the phase angle $\phi_{ku}$ is equal to the quantity $\phi_p - \phi_q$.

The first term on the right hand side of equation (12) is simply the optical intensity resulting from the sum of the interference terms associated with "straight through" lightwave components (e.g., $E_{is}^+$, $E_{js}^+$, $E_{is}^-$, and $E_{js}^-$). Although these "straight through" components, as discussed above, do not result in phase errors, they nevertheless interfere in response to the rotationally induced "Sagnac" phase difference. The remaining term on the right hand side of equation (12) is the optical intensity resulting from the sum of interference terms associated with Group III components. (Compare equation (12) with equation (9)). It will be recalled that such interference terms do not result in a phase error so long as all the modes have equal intensities.

Equation (12) may be rewritten as follows:

$$I_i \cos\phi_s = \tfrac{1}{2} I_T\left[\frac{1}{N}\left(\sum_{k=1}^{N}\xi_k^2 - \sum_{\substack{u=1\\ k\neq u}}^{N}\eta_{ku}^2\cos\phi_{ku}\right)\cos\phi_s\right] \tag{13}$$

where $I_T = N\,|E|^2$.

From equation (13), it may be seen that both the "straight through" interference terms and the Group III, "cross coupling" interference terms are summed over the N modes, and then are divided by N, so that they may be viewed as being averaged over the N modes. If there are many modes, changes in $\xi$ and $\eta$, due to perturbations of the fiber, will be averaged, yielding a more stable signal. The stability of the signal is proportional to $1/\sqrt{N}$.

In addition, it should be noted that the phase anglee $\phi_{ku}$ may have any value between 0 and 360°, and that this value may be either positive or negative. Therefore, as the number of modes increases, the average value of $\cos\phi_{ku}$ tends towards zero, thus reducing equation (13) to:

$$I_i \cos\phi_s = \tfrac{1}{2} I_T\left[\frac{1}{N}\left(\sum_{k=1}^{N}\xi_k^2\right)\cos\phi_s\right] \tag{14}$$

In practice, it has been found that:

$$\frac{1}{N}\sum_{k=1}^{N}\xi_k^2 \approx \tfrac{1}{2} I_T \tag{15}$$

and that:

$$I_{dc} \approx \tfrac{1}{2} I_T \tag{16}$$

Substituting equation (15) into equation (14), and equations (14 and (15) into equation (10) yields:

$$I_{DET} = \tfrac{1}{2} I_T\,(1 + \tfrac{1}{2}\cos\phi_s) \tag{17}$$

Thus, the intensity of the optical output signal $W_0$, as measured by the detector 20, will vary in response to the rotationally induced Sagnac phase difference $\phi_s$, as shown by the curve 52 in solid lines in Figure 5. By eliminating Group I, II, and III phase errors, the total accumulated phase error $\phi_e$ is zero, so that the curve 52 will remain stable with respect to phase, e.g., without translation along the $\phi_s$ axis in Figure 5. Further, the amplitude of the curve 52 tends to remain stable, substantially insensitive to changes in birefringence caused by environmental factors, since the remaining interference terms are averaged over the N modes of the fiber. The stability of the curve 52 amplitude is proportional to

$$\frac{1}{\sqrt{N}}.$$

The rotation sensor of the present invention also advantageously reduces the effects of light which is backscattered in the fiber loop. In this regard, it will be recognized that present state-of-the-art optical fibers are not optically perfect, but have imperfections which cause scattering of small amounts of light. This phenomena is commonly referred to as Rayleigh scattering. Although such scattering causes some light to be lost from the fiber, the amount of such loss is relatively small, and thus, is not a major concern. The principal problem associated with Rayleigh scattering relates to the portion of the light which is reflected so that it propagates through the fiber in a direction opposite to its original direction of propagation. This is commonly referred to as "backscattered" light. To the extent that such backscattered light is coherent with light travelling in the same direction around the loop 16, it can constructively or destructively interfere therewith, and thereby cause variation in the intensity of the optical output signal $W_0$, as measured by the detector 20. Such interference is reduced in the present invention by utilizing the source 10, which permits launching of each mode with light that is incoherent with respect to the other modes. Thus, backscattered light originating from e.g., mode i, but captured by another mode, e.g. mode j, will not interfere with light in that other mode, e.g. mode j. Further, when the light waves are recombined at the coupler 14, the light in e.g. mode i will not interfere with backscattered light that originated in mode i and was captured by another mode, e.g. mode j, since the modes are orthogonal. Consequently, the only backscattered light which can cause interference is that backscattered light which originated in a particular mode and remained in that same mode during traverse of the loop 16. In effect, the backscattered light is averaged over the N-modes, so that the amount of interference from backscattered light is inversely proportional to the number of modes. Accordingly, for reduction of back scatter, it is preferable to use a fiber having a large number of modes.

## Claims

1. A rotation sensor comprising a Sagnac interferometer having a loop (16) of multimode optical fiber, a light source (10) for producing a light, a coupler (14) which splits the light into two lightwaves which propagate in opposite directions through the loop (16), and a detector 20 which detects an optical output signal after propagation of the light through the loop (16), characterized in that the light source (10) and coupler (14) are arranged such that the optical power for each of the two lightwaves is substantially evenly divided among the modes of said multimode fiber, the coupler (14) is adapted to combine the two lightwaves after propagation through said loop (16) to form the optical output signal comprised of light from substantially all of the modes of said fiber, and the detector (20) is positioned to intercept the optical output signal and detect the light from substantially all of the modes.

2. A rotation sensor as defined by Claim 1, characterized in that said coupler (14) comprises a fiber optic directional coupler.

3. A rotation sensor as defined by Claim 1, characterized by further including a mode scrambler (40) for equalizing the respective intensities of light in said modes.

4. A rotation sensor as defined by Claim 1, characterized by further comprising a phase modulator (40) for modulating the phase of light produced by said light source (10).

5. A rotation sensor as defined by Claim 4, characterized in that said phase modulator (40) is randomly driven by a signal.

6. A rotation sensor as defined by Claim 4, characterized in that said phase modulator (40) is driven at a frequency outside the bandwidth of said detector (20).

7. A rotation sensor as defined by Claim 4, characterized in that said phase modulator (40) is located between said light source (10) and said coupler (14).

8. A rotation sensor as defined by any of Claims 1—7, characterized in that said light source (10) comprises a light emitting diode.

9. A rotation sensor as defined by any of Claims 1—8, characterized in that each mode of said multimode fiber is launched with light which is substantially incoherent with respect to the light launched into the other modes.

10. A rotation sensor as defined by any of Claims 1—9, characterized in that the coherence length of light produced by said light source (10) is such that: K is less than or equal to 0.01 $N^2$, where N is the number of propagation modes of said multimode fiber for the light produced by said light source (10), and

K is the number of pairs of such modes in which the optical path length difference in said loop (16) is less than said coherence length.

11. A rotation sensor as defined by any of Claims 1—9, characterized in that said light source (10) produces light have a coherence length which is less than the optical path length difference between the mode having the longest optical path and the mode having the shortest optical path for said lightwavers during propagation through said loop (16).

12. A rotation sensor as defined by any of Claims 1—11, characterized in that said light source (10) produces light having a coherence length which is less than the smallest optical path length difference between modes for said lightwaves during propagation through said loop (16).

13. A rotation sensor as defined by any of Claims 1—12, characterised in that the detector (20) has a sufficiently large surface area to intercept substantially the entire optical output signal.

14. A method of sensing rotation with a Sagnac interferometer comprising the steps of introducing light into a loop (16) of multimode optical fiber, splitting the light into two lightwaves which propagate in opposite directions through the loop (16) and detecting an optical output signal after propagation of the light through the loop (16) characterised by substantially evenly dividing the optical power for each of the two lightwaves among the modes of said multimode fiber, combining the two waves after passing through the loop (16) to produce an optical output signal comprised of light from substantially all of the modes, and detecting light from substantially all of the modes.

15. A method of sensing rotation as defined by Claim 14, characterized in that the light has a coherence length which is less than the optical path length difference between two modes of said fiber for said lightwaves during propagation through said loop.

16. A method of sensing rotation as defined by Claim 14, characterized in that the coherence length of the light is such that K is less than or equal to 0.01 $N^2$, where N is the number of propagation modes of said fiber, and K is the number of pairs of modes in which the optical path length difference in said loop is less than said coherence length.

17. A method of sensing rotation as defined by any of Claims 14 to 16, characterized in that the introducing step comprises launching each of the modes of the multimode fiber with light that is substantially incoherent with respect to light launched in the other of the modes of the multimode fiber.

18. A method of sensing rotation as defined by any of Claims 14 to 17, characterized in that the detecting step comprises selecting a detector (20) having a sufficiently large surface area to intercept substantially the entire optical output signal and positioning the detector (20) to intercept substantially the entire output signal.

## Patentansprüche

1. Rotationssensor mit einem Sagnac-Interferometer, welches eine Schleife (16) einer multimodalen optischen Faser besitzt, mit einer Lichtquelle (10) zur Erzeugung eines Lichts, einem Koppler (14), der das Licht in zwei Lichtwellen teilt, die sich in entgegengesetzten Richtungen durch die Schleife (16) fortpflanzen, und mit einem Detektor (20), der ein optisches Ausgangssignal nach der Fortpflanzung des Lichts durch die Schleife (16) feststellt, dadurch gekennzeichnet, daß die Lichtquelle (10) und der Koppler (14) derart angeordnet sind, daß die optische Leistung für jede der beiden Lichtwellen im wesentlichen gleichmäßig auf die Moden der multimodalen Faser verteilt wird, daß der Koppler (14) derart ausgebildet ist, daß er die beiden Lichtwellen nach dem Durchlaufen der Schleife (16) zur Bildung des optischen Ausgangssignals, das aus Licht von im wesentlichen all der Moden der Faser zusammengesetzt ist, kombiniert, und daß der Detektor (20) derart positioniert ist, daß er das optische Ausgangssignal auffängt und das Licht aus im wesentlichen allen der Moden detektiert.

2. Rotationssensor nach Anspruch 1, dadurch gekennzeichnet, daß der Koppler (14) aus einem faseroptischen Richtkoppler besteht.

3. Rotationssensor nach Anspruch 1, dadurch gekennzeichnet, daß ein Moden-Scrambler (40) zur Egalisierung der jeweiligen Lichtintensitäten in den Moden vorgesehen ist.

4. Rotationssensor nach Anspruch 1, dadurch gekennzeichnet, daß ferner ein Phasenmodulator (40) zur Modulierung der Lichtphase, die durch die Lichtquelle (10) erzeugt wurde, vorgesehen ist.

5. Rotationssensor nach Anspruch 4, dadurch gekennzeichnet, daß der Phasenmodulator (40) durch ein Signal zufällig angetrieben ist.

6. Rotationssensor nach Anspruch 4, dadurch gekennzeichnet, daß der Phasenmodulator (40) mit einer Frequenz außerhalb der Bandbriete des Detektors (20) angetrieben ist.

7. Rotationssensor nach Anspruch 4, dadurch gekennzeichnet, daß der Phasenmodulator (40) zwischen der Lichtquelle (10) und der Koppler (14) gelegen ist.

8. Rotationssensor nach einem der Ansprüche 1 bis 7, dadurch gekennzeichnet, daß die Lichtquelle (10) eine lichtemittierende Diode umfaßt.

9. Rotationssensor nach einem der Ansprüche 1 bis 8, dadurch gekennzeichnet, daß jeder Modus der multimodalen Faser mit Licht abgesetzt wird, das im wesentlichen inkohärent bezüglich des in den anderen Moden abgesetzten Lichts ist.

10. Rotationssensor nach einem der Ansprüche 1 bis 9, dadurch gekennzeichnet, daß die

Koherenzlänge des von der Lichtquelle (10) produzierten Lichts derart beschaffen ist, daß: K kleiner ist oder gleich 0,01 $N^2$, wobei N die Zahl der Fortpflanzungsmoden der multimodalen Faser für das von der Lichtquelle (10) erzeugte Licht ist, während K die Zahl der Paare solcher Moden ist, in denen die optische Pfadlängendifferenz in der Schleife (16) kleiner ist als diese Kohärenzlänge.

11. Rotationssensor nach einem der Ansprüche 1 bis 9, dadurch gekennzeichnet, daß die Lichtquelle (10) ein Licht produziert, das eine Koherenzlänge besitzt, die kleiner ist als die optische Pfadlängendifferenz zwischen dem Modus mit dem längsten optischen Pfad und demjenigen Modus, der den kürzesten optischen Pfad für die Lichtwellen während der Fortpflanzung durch die Schleife (16) besitzt.

12. Rotationssensor nach einem der Ansprüche 1 bis 11, dadurch gekennzeichnet, daß die Lichtquelle (10) ein Licht erzeugt, das eine Koherenzlänge besitzt, die kleiner ist als die kleinste optische Pfadlängendifferenz zwischen Moden für die Lichtwellen während der Fortpflanzung durch die Schleife (16).

13. Rotationssensor nach einem der Ansprüche 1 bis 12, dadurch gekennzeichnet, daß der Detektor (20) eine ausreichend große Oberfläche besitzt, damit er im wesentlichen das gesamte optische Ausgangssignal aufnimmt.

14. Verfahren zur Rotationsermittlung mit einem Sagnac-Interferometer, mit den Verfahrensschritten: Einführen von Licht in eine Schleife (16) einer multimodalen optischen Faser, Aufteilen des Lichtes in zwei Lichtwellen, die sich in entgegengesetzten Richtungen durch die Schleife (16) fortpflanzen und Detektieren eines optischen AUsgangssignales nach dem Durchlaufen der Schleife (16) durch das Licht, dadurch gekennzeichnet, daß zwischen den Moden der multimodalen Faser die optische Leistung für jede der beiden Lichtwellen im wesentlichen gleichmäßig aufgeteilt wird, daß die beiden Wellen nach dem Durchgang durch die Schleife (16) kombiniert werden, um ein optisches Ausgangssignal zu erzeugen, das aus Licht aus im wesentlichen all dem Moden besteht, und daß das Licht aus im wesentlichen all den Moden detektiert wird.

15. Verfahren zur Rotationsermittlung nach Anspruch 14, dadurch gekennzeichnet, daß das Licht eine Kohärenzlänge besitzt, die kleiner ist als der optische Pfadlängenunterschied zwischen zwei Moden der Faser für die Lichtwellen während der Fortpflanzung durch die Schleife.

16. Verfahren zur Rotationsermittlung nach Anspruch 14, dadurch gekennzeichnet, daß die Koherenzlänge des Lichtes derart ist, daß K kleiner oder gleich 0,01 $N^2$ ist, wobei N die Zahl der Fortpflanzungsmoden der Faser ist und K die Anzahl der Paare von Moden, in denen die optischen Pfadlängendifferenzen in der Schleife kleiner als die Kohärenzlänge ist.

17. Verfahren zur Rotationsermittlung nach einem der Ansprüche 14 bis 16, dadurch gekennzeichnet, daß beim Verfahrensschritt des Einführens jede der Moden der multimodalen Faser mit Licht abgesetzt wird, das im wesentlichen inkoherent bezüglich des Lichtes ist, das in der anderen der Moden der multimodalen Faser abgesetzt wurde.

18. Verfahren zur Rotationsermittlung nach einem der Ansprüche 14 bis 17, dadurch gekennzeichnet, daß beim Verfahrensschritt der Detektierung ein Detektor (20) gewählt wird, der einen ausreichend großen Oberflächenbereich besitzt, damit er im wesentlichen das gesamte optische Ausgangssignal aufnimmt, und daß der Detektor (20) derart positioniert wird, daß er das gesamte Ausgangssignal aufnimmt.

**Revendications**

1. Détecteur de rotation comprenant un interféromètre de Sagnac ayant une boucle (16) de fibre optique multimode, une source de lumière (10) émettant de la lumière, un coupleur (14) qui divise la lumière en deux ondes de lumière se propageant à travers la boucle (16) dans des directions opposées, et un détecteur (20) détectant un signal optique de sortie après propagation de la lumière à travers la boucle (16), caractérisé en ce que la source de lumière (10) et le coupleur (14) sont disposés de telle sorte que la puissance optique pour chacune des ondes de lumière est répartie essentiellement de manieère égale entre les modes de ladite fibre multimode, en ce que le coupleur (14) est adapté de manière à combiner les deux ondes de lumière après leur propagation à travers ladite boucle (16) afin de former le signal optique de sortie consistant en la lumière provenant de tous les modes de ladite fibre, et en ce que le détecteur (20) est placé de manière à intercepter le signal optique de sortie et à détecteur la lumière provenant essentiellement de tous les modes.

2. Détecteur de rotation selon la revendication 1, caractérisé en ce que ledit coupleur (14) comprend un coupler directionnel à fibre optique.

3. Détecteur de rotation selon la revendication 1, caractérisé en outre par un brouilleur de mode (40) égalisant les intensités respectives de la lumière dans lesdits modes.

4. Détecteur de rotation selon la revendication 1, caractérisé en outre par un modulateur de phase (40) modulant la phase de la lumière émise par ladite source de lumière (10).

5. Détecteur de rotation selon la revendication 4, caractérisé en ce que ledit modulateur (40) est commandé de manière aléatoire par un signal.

6. Détecteur de rotation selon la revendication 4, caractérisé en ce que ledit modulateur (40) est commandé a une fréquence se situant à l'extérieur de la largeur de bande dudit détecteur (20).

7. Détecteur de rotation selon la revendication 4, caractérisé en ce que ledit modulateur de phase (40) est placé entre ladite source de lumière (10) et ledit coupleur (14).

8. Détecteur de rotation selon l'une quelconque des revendications 1 à 7, caractérisé en ce que ladite source de lumière (10) comprend une diode émettrice de lumière.

9. Détecteur de rotation selon l'une quelconque des revendications 1 à 8, caractérisé en ce que la lumière émise dans chaque mode de ladite fibre multimode est essentiellement incohérente par rapport à la lumière émise dans les autres modes.

10. Détecteur de rotation selon l'une quelconque des revendications 1 à 9, caractérisé en ce que la longueur de cohérence de la lumière émise par ladite source de lumière (10) est telle que K est inférieur ou égal à 0.01 $N^2$, N étant le nombre de modes de propagation de ladite fibre multimode pour la lumière émise par ladite source de lumière (10) et K étant le nombre de paires de modes pour lesquels la différence de longueur de chemin optique dans ladite boucle (16) est inférieure à ladite longueur de cohérence.

11. Détecteur de rotation selon l'une quelconque des revendications 1 à 9, caractérisé en ce que ladite source de lumière (10) émet de la lumière ayant une longueur de cohérence inférieure à la différence de longueur de chemin optique entre le mode ayant le plus long chemin optique et le mode ayant le plus court chemin optique pour lesdites ondes de lumière pendant leur propagation à travers ladite boucle (16).

12. Détecteur de rotation selon l'une quelconque des revendications 1 à 11, caractérisé en ce que ladite source de lumière (10) émet de la lumière ayant une longueur de cohérence inférieure à la plus courte différence de longueur de chemin optique pour lesdites ondes de lumière pendant leur propagation à travers ladite boucle (16).

13. Détecteur de rotation selon l'une quelconque des revendications 1 à 12, caractérisé en ce que le détecteur (20) a une surface suffisamment grande pour intercepter essentiellement le signal optique de sortie tout entier.

14. Méthode de détection de rotation à l'aide d'un interféromètre de Sagnac comprenant l'introduction de lumière dans une boucle (16) de fibre optique multimode, la division de la lumière en deux ondes de lumière se propageant dans des directions opposées à travers ladite boucle (16) et la détection d'un signal optique de sortie après propagation de la lumière à travers ladite boucle (16), caractérisé par l'égale répartition de la puissance optique pour chacune des ondes de lumière parmi les modes de ladite fibre multimode, la combinaison des deux ondes après leur passage à travers ladite boucle (16) afin de produire un signal optique de sortie consistant en la lumière provenant essentiellement de tous les modes, et la détection de la lumière provenant essentiellement de tous les modes.

15. Méthode de détection de rotation selon la revendication 14, caractérisé en ce que la lumière a une longueur de cohérence inférieure à la différence de longueur de chemin optique entre deux modes de ladite fibre pour lesdites ondes de lumière pendant leur propagation à travers la boucle (16).

16. Méthode de détection de rotation selon la revendication 14, caractérisé en ce que la longueur de cohérence de la lumière est telle que K est inférieur ou égal à 0.01 $N^2$, N étant le nombre de modes de propagation de ladite fibre, et K étant le nombre de paires de modes pour lesquels la différence de longueur de chemin optique dans ladite boucle (16) est inférieure à ladite longueur de cohérence.

17. Méthode de détection de rotation selon l'une quelconque des revendications 14 à 16, caractérisé en ce que l'étape d'introduction comprend l'émission dans chacun des modes de la fibre multimode de lumière essentiellement incohérente par rapport à la lumière émise dans les autres modes de la fibre multimode.

18. Méthode de détection de rotation selon l'une quelconque des revendications 14 à 17, caractérisé en ce que l'étape de détection comprend la sélection d'un détecteur (20) ayant une surface suffisamment grande pour intercepter essentiellement le signal optique de sortie tout entier, et le placement du détecteur (20) afin d'intercepter essentiellement le signal de sortie tout entier.

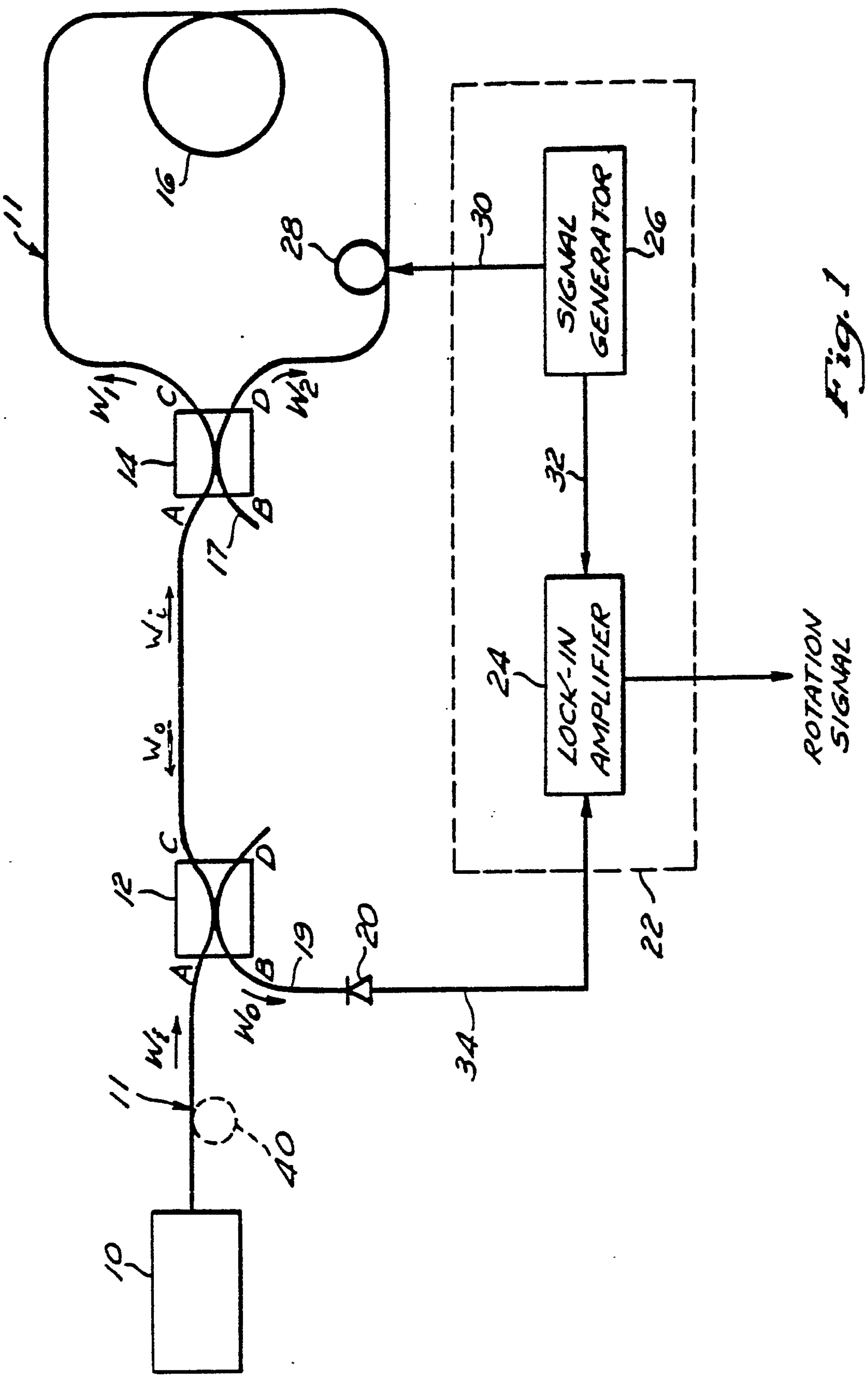
SIGNAL GENERATOR
LOCK-IN AMPLIFIER
ROTATION SIGNAL
10
11
12
14
16
17
19
20
22
24
26
28
30
32
34
40
A
B
C
D
$W_1$
$W_2$
$W_i$
$W_o$

Fig. 1

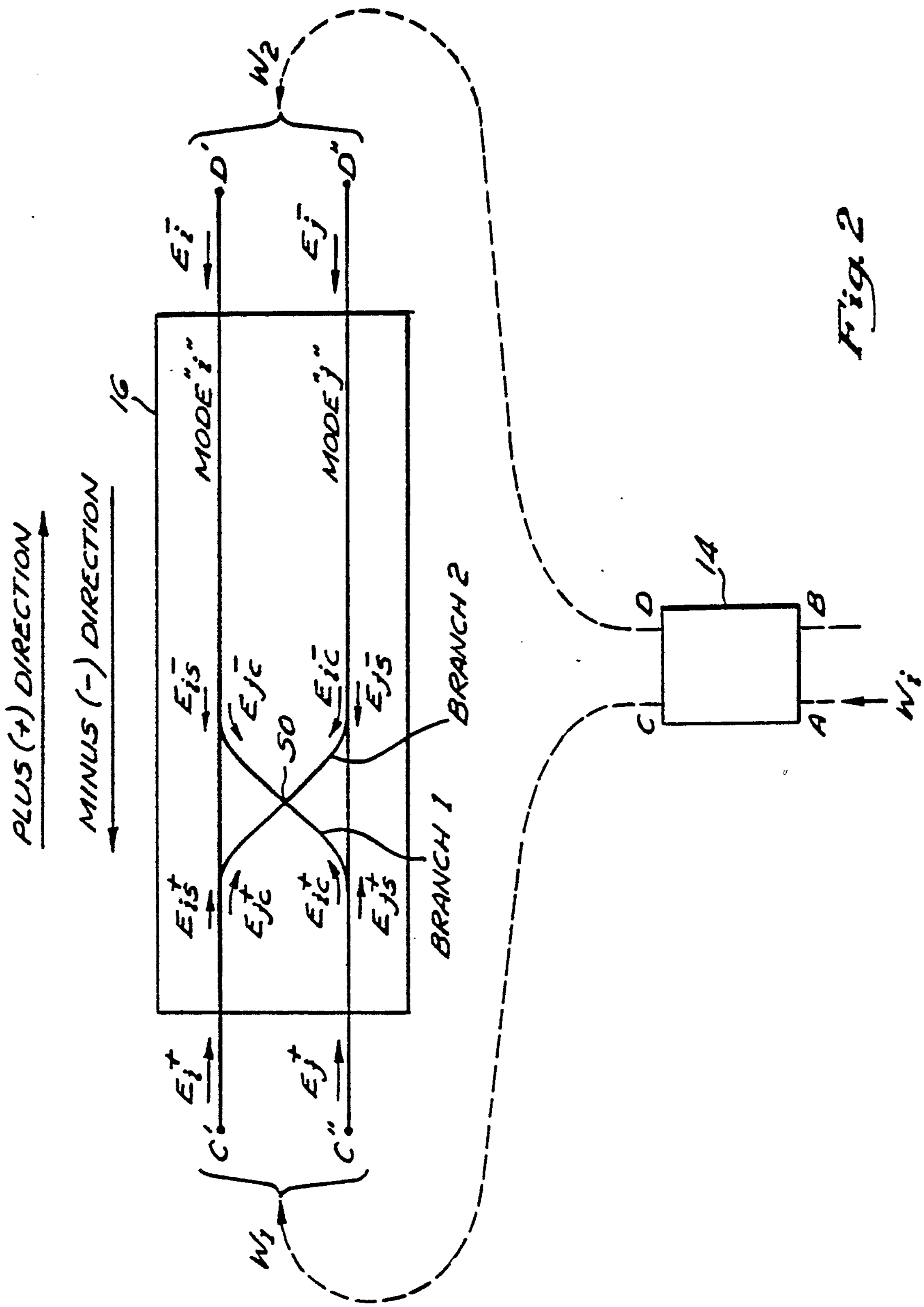

PLUS (+) DIRECTION
MINUS (-) DIRECTION
16
MODE "i"
MODE "j"
BRANCH 1
BRANCH 2
50
14
A
B
C
D
C'
C"
D'
D"
W1
W2
Wi


Fig 2

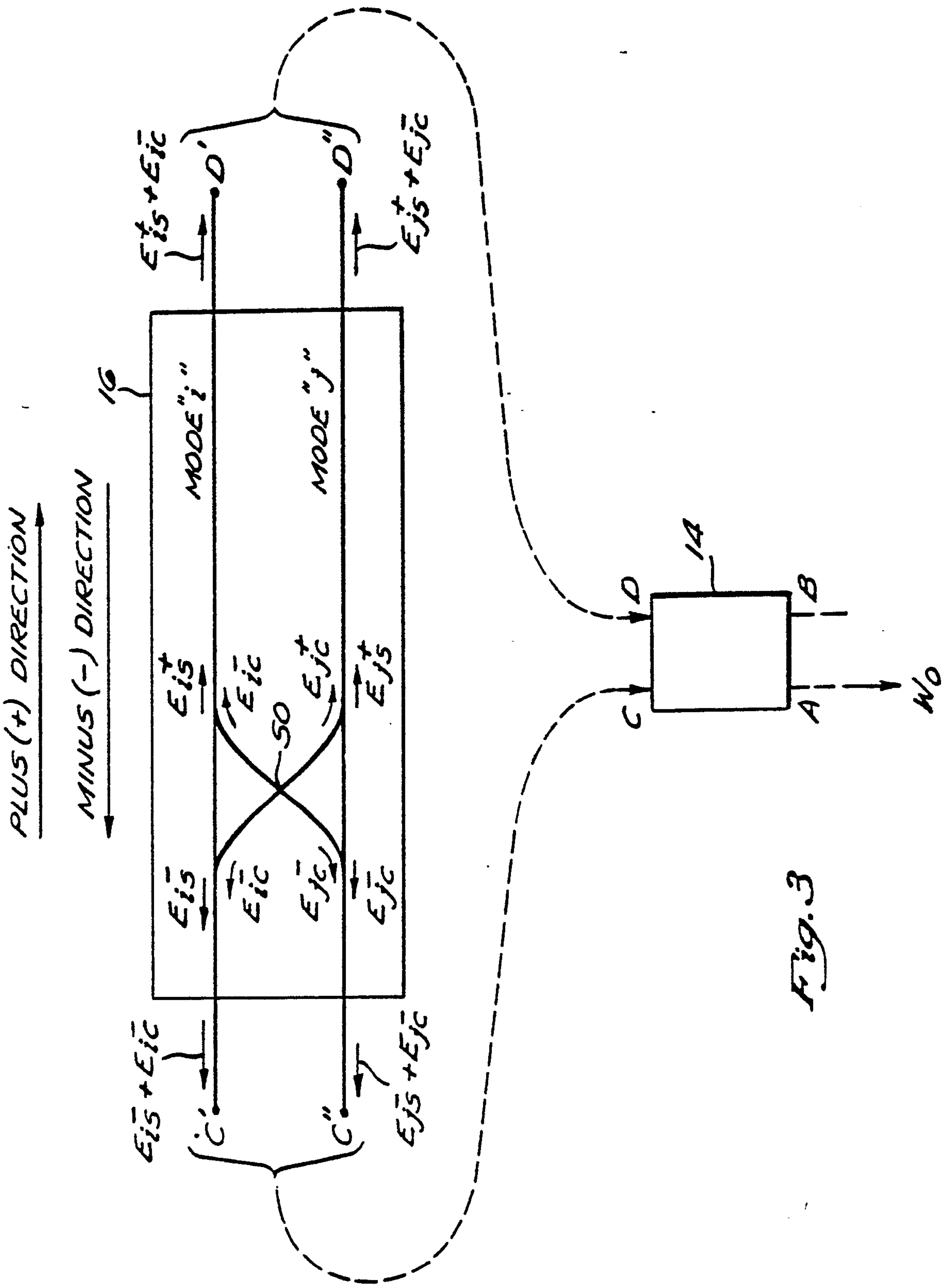
PLUS (+) DIRECTION
MINUS (-) DIRECTION
16
MODE "i"
MODE "j"
50
D'
D"
C'
C"
14
D
B
C
A
$W_O$
$E_{is}^{+} + E_{ic}^{-}$
$E_{js}^{+} + E_{jc}^{-}$
$E_{is}^{-} + E_{ic}^{-}$
$E_{js}^{-} + E_{jc}^{-}$

Fig.3

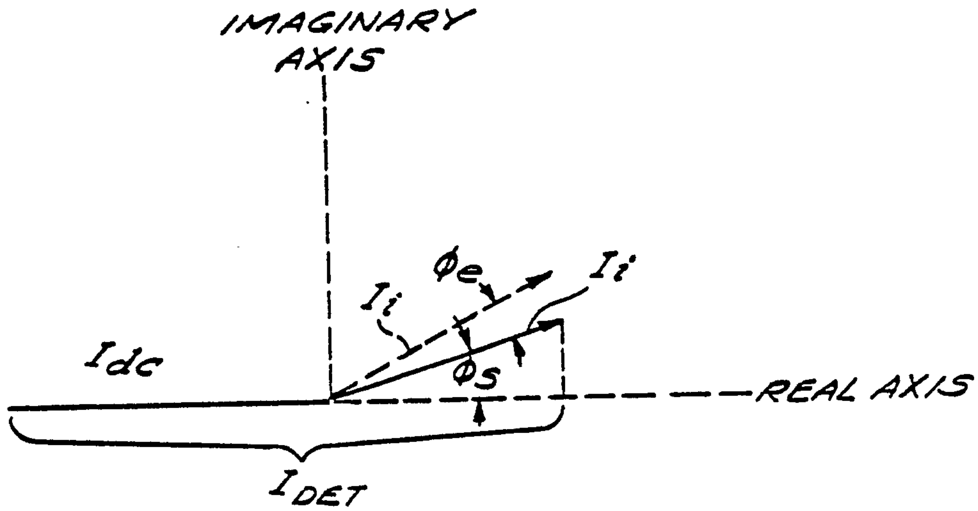
IMAGINARY AXIS
$\phi e$
$Ii$
$Ii$
$Idc$
$\phi s$
REAL AXIS
$I_{DET}$

Fig. 4

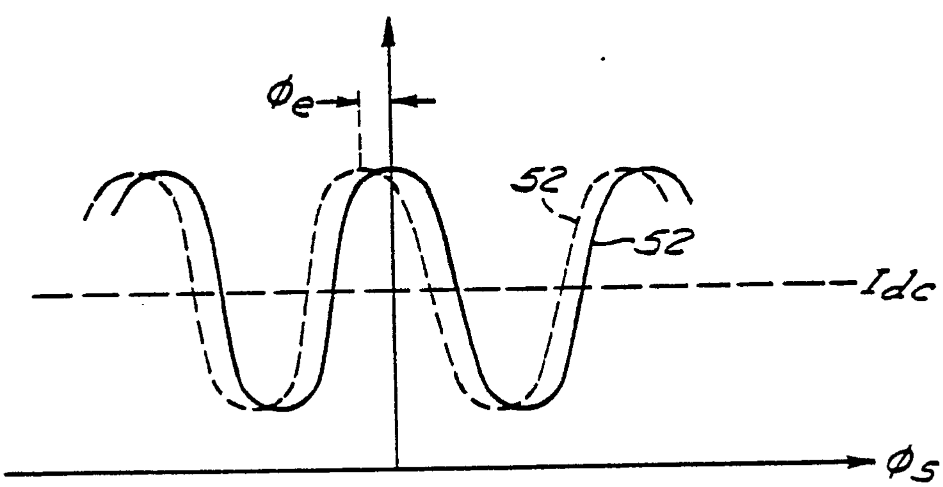
$\phi e$
52
52
$Idc$
$\phi s$

Fig. 5

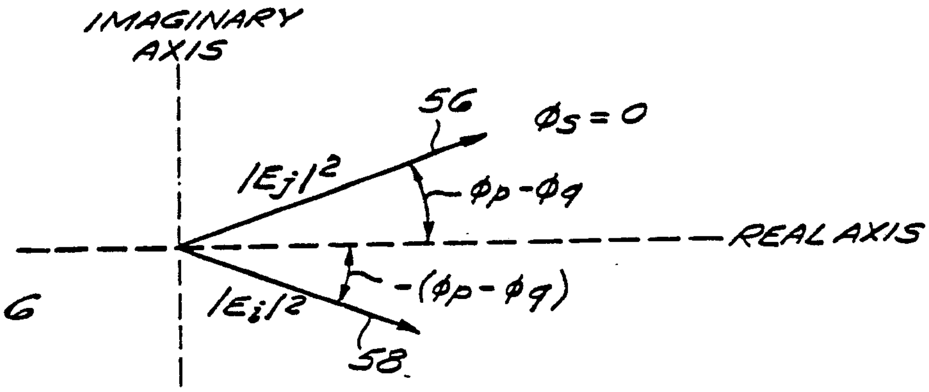


Fig. 6

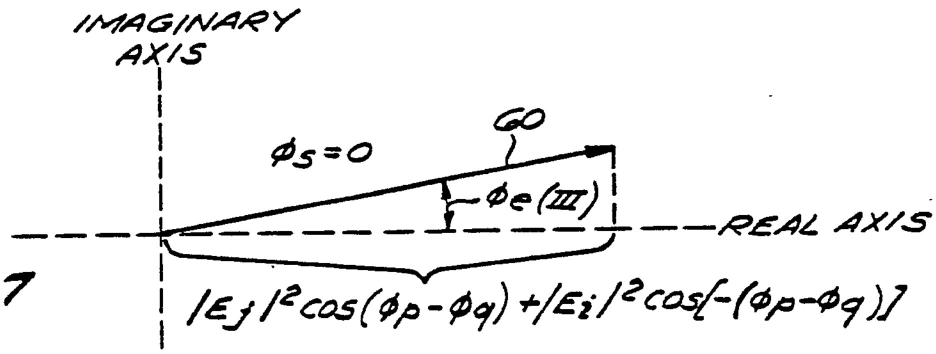


Fig. 7

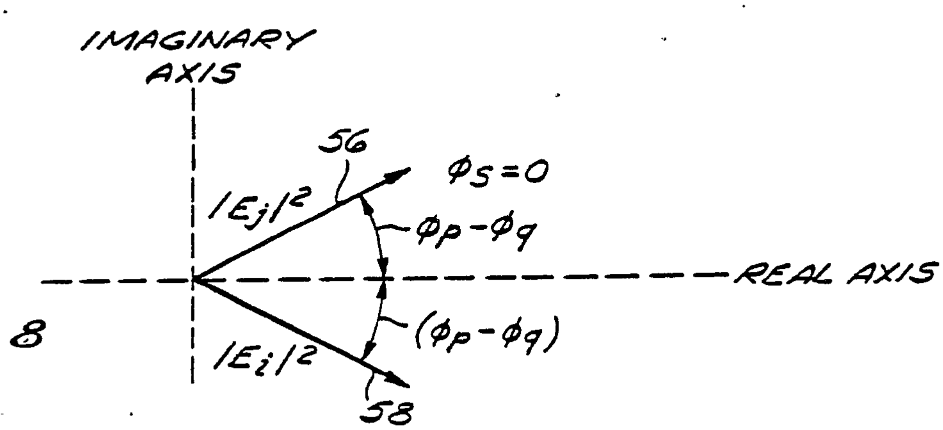


Fig. 8

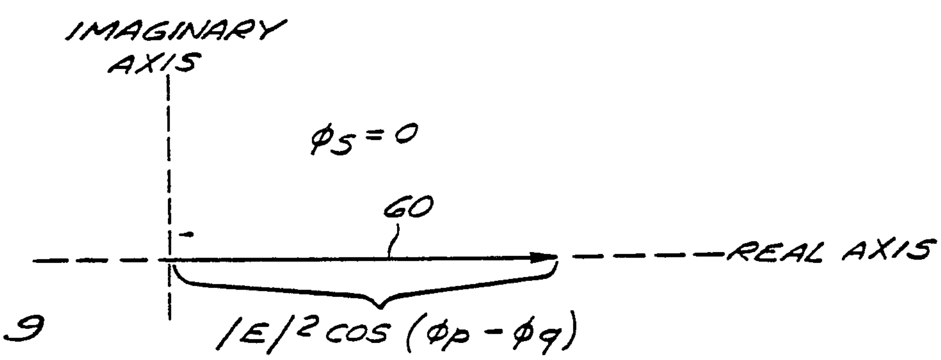


Fig. 9